## Europäisches Patentamt

## European Patent Office

## Office européen des brevets

(19)

(11) Numéro de publication: **0 043 167**
**B1**

(12)

# FASCICULE DE BREVET EUROPEEN

(45) Date de publication du fascicule du brevet:
02.01.85

(51) Int. Cl.³: **H 04 N 7/00**, H 04 N 7/16

(21) Numéro de dépôt: 81200719.3

(22) Date de dépôt: 25.06.81

(54) Procédé de transmission d'information sur des réseaux de télévision.

(30) Priorité: 01.07.80 EP 80200623

(43) Date de publication de la demande:
06.01.82 Bulletin 82/1

(45) Mention de la délivrance du brevet:
02.01.85 Bulletin 85/1

(84) Etats contractants désignés:
AT BE CH DE FR GB IT LI LU NL SE

(56) Documents cités:
FR - A - 2 177 904
FR - A - 2 313 825
FR - A - 2 316 821
GB - A - 1 369 463
US - A - 3 746 780

NHK LABORATORIES NOTE, no. 158, février 1973,
Tokyo, JP H. ANDO et al. "Experimental transmission
system of still picture broadcasting", pages 1-15
IEEE TRANSACTIONS ON CONSUMER ELECTRONICS,
vol. CE-25, no. 3, juillet 1979, New York, US H.G. BOWN
et al. "Telidon: a new approach to videotex system
design" pages 256-268

(73) Titulaire: **ATELIERS DE CONSTRUCTIONS
ELECTRIQUES DE CHARLEROI (ACEC) Société
Anonyme, Avenue Lloyd George 7, B-1050 Bruxelles (BE)**

(72) Inventeur: **Thonnart, Paul, Rue de la Centrale, 9,
B-4200 Liege (BE)**

(74) Mandataire: **Bossard, Franz et al, ACEC - Service des
Brevets Boîte Postale 4, B-6000 Charleroi (BE)**

## Description

Il est déjà connu, par exemple par le brevet français FR-A-2 316 821, d'utiliser les réseaux de télévision pour transmettre, en supplément ou en remplacement des images et des sons composant les programmes habituels, dex textes et des schémas codés, sous forme numérique, notamment au moyen d'un circuit de chiffrage, appelés ici télétexte et de permettre leur reproduction chez l'usager, sur un poste de réception ordinaire, grâce à un appareil de décodage et/ou de déchiffrage et de mémorisation équipé d'un sélecteur de »pages«. On appelle »page« l'ensemble d'informations qui apparaît simultanément sur l'écran du poste de réception. Chaque »page« comprend une rangée de caractères d'entête constituant un message d'identification de page. L'émission de cette information sous forme de textes et schémas comprenant une ou plusieurs (généralement moins de mille) trames est répétée cycliquement. Ce système connu utilise, pour transmettre des informations à deux niveaux codées sous forme numérique, les réseaux de télévision prévus pour la transmission de signaux analogiques à environ une centaine de niveaux différents à chaque instant et nécessitant un rapport signal/bruit de l'ordre de 50 dB, mais n'exploite pas ce rapport excellent, car pour la transmission d'information codée sous forme numérique, un rapport signal/bruit de 15 dB est suffisant.

Il est connu aussi, par exemple selon un article de H. ANDO (NHK LABORATORIES NOTE N° 158, Feb. 1973 pp. 1 à 15) de transmettre sur un réseau de télévision des informations constituées par des images non mobiles accompagnées de commentaires. Le son peut être comprimé dans le temps. Un code d'identification est associé à chaque ensemble image-son, composé d'un code d'identification d'images et du numéro du canal de transmission de son. A la réception, un sélecteur de programme permet de choisir un programme d'émission en définissant un code d'identification ce qui permet de reproduire sur le récepteur l'émission choisie grâce à la mise en jeu de circuits de mémorisation, de traitement et de répétition de signaux reçus.

L'invention a pour but d'exploiter la bonne qualité de transmission des réseaux de télévision par l'émission de messages dans lesquels les textes transmis sous forme numérique sont accompagnés de messages sous forme analogique représentant des images non mobiles et/ou de courts commentaires.

Un autre but de l'invention est de transmettre simultanément plusieurs informations de nature différente, chacune répérée par un message d'identification qui lui est propre et de choisir arbitrairement à l'emplacement du récepteur la simultanéité ou l'ordre de succession de la reproduction de ces informations, par exemple en fonction d'un programme didactique.

L'invention est caractérisée en ce que le contenu de l'information à transmettre est représenté d'une part par des signaux analogiques subdivisés en trames ou groupes de plusieurs trames dans lesquels chaque trame d'un même groupe répète le même contenu, chaque trame ayant une durée égale à celle nécessaire à la transmission d'une trame d'une image de télévision, en ce qu'à chaque trame ou chaque groupe de trames est associé un message d'identification d'image, en ce que d'autre part, du télétexte représenté par de signaux numériques est repéré par des messages d'identification de télétexte, en ce qu'une trame ou un groupe de plusieurs trames prédéterminé, identifié par un message d'identification d'image et du télétexte prédéterminé identifié par un message d'identification de télétexte sont choisis et transmis de manière au moins approximativement synchrone, en ce qu'on reçoit les dits signaux analogiques et numériques émis dans un récepteur sensible aux dits messages d'identification, et en ce qu'on reproduit l'information véhiculée dans les signaux analogiques et numériques en successions et/ou combinaisons simultanées arbitrairement choisies.

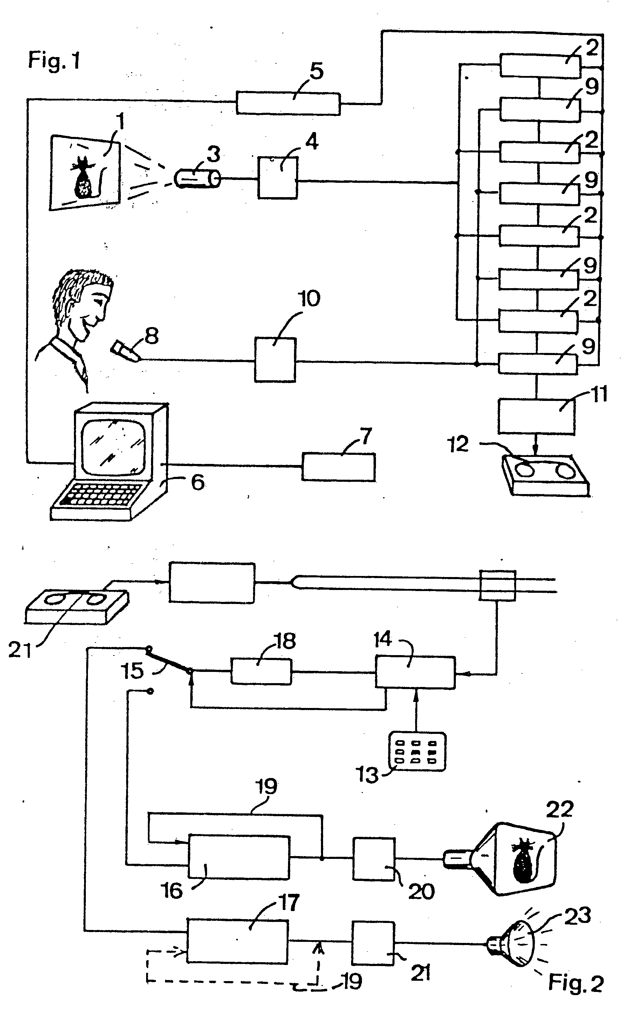

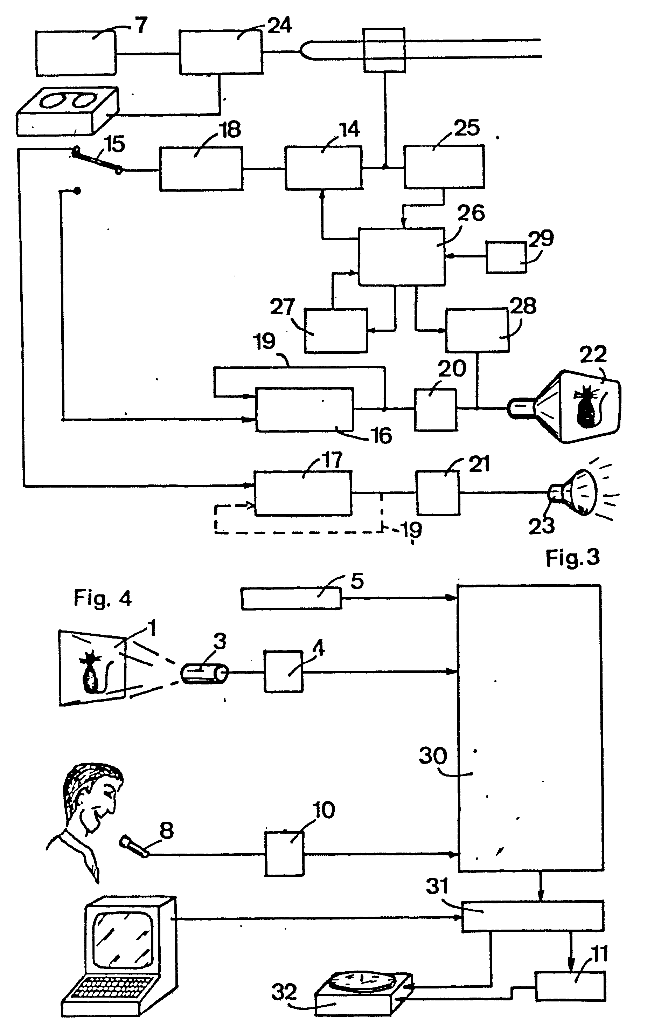

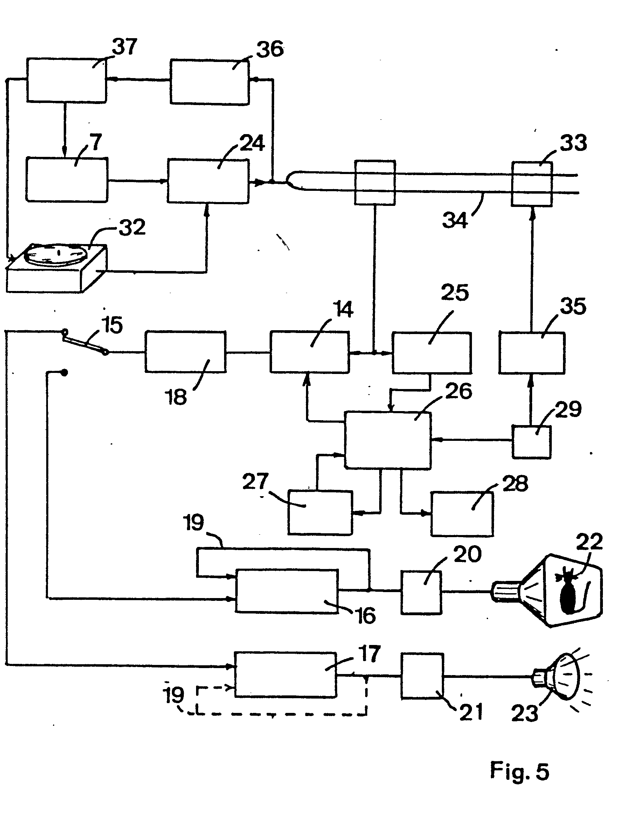

L'invention est expliquée ci-dessous par rapport à un exemple de forme d'exécution susceptible de quelques variantes, en se référant aux schémas des figures 1 à 5 du dessin annexé. Sur ce dernier les figures 1 et 4 représentent des schémas de la partie d'émission; les figures 2 et 3 représentent des schémas de la partie de réception et la figure 5 représente un schéma comprenant une partie émission et une partie réception en liaison, dite interactive.

A l'émission, figure 1, une image 1 est enregistrée dans une mémoire 2 ou un ensemble de mémoires 2 par l'intermédiaire d'un tube de vision 3 et d'un transformateur analogique-numérique 4. L'enregistrement dans la mémoire ou les mémoires 2 est complété par un message d'identification d'image, par exemple un numéro d'adresse émanant d'un générateur de messages d'identification 5, lequel peut être relié à un dispositif 6 de composition, représenté sous forme d'un clavier combiné avec un écran de contrôle. Le dispositif de composition 6 peut se confondre avec celui utilisé pour la composition de télétexte qui, comme déjà expliqué, peut compendre des parties de texte et/ou des schémas. Le texte et les schémas composés dans le dispositif 6 sont envoyés, assortis d'un message d'identification de télétexte, sous forme d'information codée numériquement dans une mémoire 7 qui peut enregistrer aussi tout un logiciel servant à gérer à la réception, la reproduction successive de texte, d'images et de commentaires sonores repérés par les différents messages d'identification, par exemple dans le cadre d'un programme didactique même relativement complexe dans lequel la succession dépend du progrès de l'élève et peut comprendre des répétitions. La mémoire 7 est par exemple une disquette.

En ce qui concerne la transmission d'images, il est possible notamment de ne décrire chaque image à transmettre qu'en une trame unique, c'est-à-dire 312,5 lignes. Cependant, pour utiliser du matériel courant de transmission d'images de télévision, il est plus avantageux, souvent, d'utiliser un procédé selon lequel chaque image est répétée sur plusieurs trames consécutives (par exemple quatre).

Pour le montage d'une bande à l'émission, dans ces conditions, il est nécessaire de préparer quatre trames avent de les enregistrer sur le magnétoscope. Eventuellement, un commentaire parlé avant, pendant ou après l'apparition de l'image ou du télétexte est reçu par un microphone 8 et envoyé sur une mémoire 9 ou un ensemble de mémoires 9 par l'intermédiaire d'un transformateur analogique-mumérique 10. L'enregistrement dans la mémoire ou les mémoires 9 est également complété par un message d'identification, à savoir un message d'identification de son, émanant du générateur 5.

Les contenus de ces mémoires 2 et 9 sont ensuite complétés par des information complémentaires telles que tops de synchronisation, etc. provenant d'un générateur approprié qui, dans certains cas, peut être incorporé au générateur 5. Les contenus »image« et »son« proprement dits des mémoires 2 et 9 sont ensuite retransformés en signaux analogiques dans un transformateur numérique-analogique 11 pour reconstituer des signaux analogiques à enregistrer sur une bande de magnétoscope de studio 12.

Lors de la reconstitution des signaux analogiques, les fréquences du signal sonore peuvent être multipliées par exemple par un facteur 1000 de manière à transmettre au moyen d'une trame qui dure 0,02 seconde un message sonore d'une durée de par exemple 20 secondes.

En plus ou à la place d'une compression dans le temps, le commentaire peut être comprimé d'une autre manière par exemple par une transformation d'Hadamard qui ncessite un échantillonnage numérique préalable à la transformation et après transformation une reconstitution d'un signal analogique de la transformée d'Hadamard. Cette complication de traitement permet une compression plus importante de la partie commentaire sonore.

Les informations enregistrées sur la bande de magnétoscope de studio 12 et dans la mémoire ou disquette 7 sont émises, par exemple, sur un canal d'émission normale pendant des moments creux où l'émetteur de télévision n'émet pas de programmes ou pendant quelques secondes entre deux programmes successifs pour être reçues avec un temps d'attente acceptable de, par exemple, quelques secondes, ou, de préférence, sur un ou plusieurs canaux normaux réservés à la transmission d'une information télétexte plus images et/ou commentaire sonore à toute heure de la journée. En particulier, un de ces canaux réservés peut véhiculer l'information codée numériquement de la mémoire 7 et un autre l'information essentiellement analogique enregistrée dans l'enregistreur à bande 12. Dans le cas de l'émission sur un seul canal d'émission normale, les heures creuses sont de préférence réservés à l'émission de programmes scolaires ou similaires dont l'identification particulière permet de mettre en marche un magnétoscope chez les usagers de ce genre de programmes.

A la réception, les informations »image« et »son« peuvent être reportées d'abord soit sur une bande de vidéo-cassette, ou suivant figure 2, peuvent faire l'objet directement d'une sélection à travers un décodeur approprié, comprenant au moins un sélecteur 13 agissant sur un détecteur des messages d'identification 14. Ce dernier détecte la partie »image« et la partie »son« du message sélectionné et les envoie, grâce à un interrupteur 15 qu'il actionne, dans des mémoires numériques 16 pour l'image ou 17 pour le son en passant par un transformateur analogique-numérique 18.

Un dispositiv de reproduction de l'information contenue dans les mémoires 16 et 17, consiste en des circuits de répétition 19 et des transformateurs numérique-analogique 20 pour l'image ou 21 pour le son, appropriés, alimentant soit le tube image 22 soit, après reconstitution du signal sonore original, le haut parleur 23 du récepteur de l'usager.

La transmission de la totalité de l'information est réalisée par exemple sur un seul canal au moyen d'un équipement selon le schéma de la figure 3. L'émission de l'information enregistrée dans la mémoire 7, par exemple sur des disquettes, est émise à travers un multiplexeur 24, ainsi que l'information provenant de l'enregistreur à bande 12. Le signal de sortie composite du multiplexeur 24 comprend donc un mélange· de signaux codés sous forme numérique et de signaux analogiques. L'information sous forme numérique est émise ici pendant des temps déterminés, prélevés sur les trames de l'information sous forme analogique dans des parties non significatives de ces dernières notamment dans les lignes 10 à 18 et 323 à 335 d'une paire de trames relative à une ou deux images non mobiles. De préférence la transmission du télétexte relatif à une image est effectuée en snychronisme avec cette image. Toutefois, en cas de déséquilibre entre la quantité d'information des deux sortes numérique et analogique, ce synchronisme peut être sacrifié grâce à la transmission simultanée d'un logiciel de gestion approprié dont le but est d'optimiser à tout instant la quantité d'information en fonction de la capacité de transmission du canal alloué. Le mélange d'information numérique et d'information analogique est récolté à l'emplacement des divers récepteurs.

Dans un récepteur, le signal reçu est envoyé simultanément d'une part à un décodeur de télétexte 25 et d'autre part au détecteur des messages d'identification 14 dont les signaux de sortie sont traités de la même manière que dans le système selon la figure 2. Si au contraire, un canal différent est affecté à la transmission du télétexte ou de la partie numérique et à la transmission des signaux analogiques, le détecteur 14 est relié à un dispositif de réception de l'information sur un de ces canaux et le décodeur de télétexte 25 à un dispositif de réception de l'information sur l'autre canal.

Dans ce cas aussi, une synchronisation entre télétexte et information sous forme analogique correspondante représente le cas idéal, mais pour les mêmes raisons que dans le cas d'un seul canal, un logiciel de gestion peut permettre des écarts de ce synchronisme idéal en vue d'optimiser la quantité d'information de chaque sorte à transmettre avec la capacité de transmission de l'ensemble des différents canaux alloués.

Le décodeur de télétexte ou plus exactement de l'information transmise sous forme numérique qui comprend, outre le télétexte, aussi le logiciel est relié à un reconnaisseur de messages 26 qui sépare le télétexte des informations concernant le logiciel de l'exploitation de l'ensemble télétexte, image et commentaire sonore à la réception. Il envoie des dernières dans une mémoire 27 et une page de télétexte sélectionnée dans une mémoire 28. Le contenu de la mémoire 28 est ensuite affiché sur l'écran 22. La sélection d'une page de télétexte est opérée dans le reconnaisseur de messages 26, par exemple en fonction d'un programme enregistré dans la mémoire 27. Cette sélection s'opère en général dans un délai très bref entre une fraction de seconde et quelques secondes, c'est-à-dire le temps de répétition de l'information imposé par exemple à l'émission. Il est aussi possible de sélectionner des pages de télétexte et/ou des images et/ou des commentaires sonores au moyen d'un clavier 29 qui se présente par exemple sous forme d'un clavier alpha-numérique. Via ce clavier 29 et/ou le logiciel emmagasiné dans la mémoire 27 dont les ordres transitent par le reconnaisseur de messages 26 pour atteindre éventuellement le détecteur 14, il est possible d'appeler à n'importe quel moment déterminé, par exemple par un programme didactique enregistré dans la mémoire 27, une page déterminée de télétexte, un image ou plus concrètement une diapositive et/ou un commentaire sonore illustrant le télétexte, ou une partie d'un texte ou d'un schéma qui apparaît ensuite sur l'écran 22.

En ce qui concerne la constitution du support de l'information à transmettre, représenté à la figure 1 par l'ensemble constitué d'une video-cassette 12 et d'une disquette 7, il est possible aussi de procéder selon le schéma de la figure 4 où l'ensemble des mémoires 2 et 9 est remplacé par une mémoire électronique 30 d'une taille aux environs de 4 Mbits qui opère un transfert périodique sur une mémoire 31 plus lente, d'une taille de 1000 Mbits remplaçant en partie la mémoire 7. Le contenu de la mémoire 31 est ensuite transféré sur un support de grande qualité, par exemple un vidéo-disque 32 en passant, au moins en partie, par un transformateur numérique-analogique 11. Lors de l'émission, le vidéo-disque est lu par l'intermédiaire d'un faisceau de laser, ce qui garantit une usure pratiquement nulle, particulièrement importante puisque l'information est transmise de manière répétitive.

Les exemples selon les figures 3 et 4 décrits ci-dessus appartiennent au mode de fonctionnement »diffusé« dans lequel il n'est pas possible, à partir du poste de réception, d'influencer le programme diffusé à l'endroit de l'émetteur.

Un autre exemple d'un schéma de la partie émission fonctionnant en mode »interactif« est montré à la figure 5 dont une grande partie est identique à la figure 3. La description de cette partie n'est pas répétée ici. Un coupleur bi-directionnel 33 permet d'envoyer sur un câble de télé-distrubution 34 un message qu'un opérateur compose sur le clavier 29. Ce message est traité par un convertisseur 35 avant son émission. La fonction de ce vonvertisseur 35 est de mettre le message sous forme d'un gabarit standard adéquat, d'y adjoindre le code du poste récepteur et d'insérer le message sur le cable de télédistribution 34 pendant un silence sur la voie entre récepteur et émetteur. Après réception du message à l'endroit de l'émetteur dans un décodeur 36, la demande est transmise à un gestionnaire 37 qui peut commander la sélection d'informations particulières sur la disquette 7 et sur un vidéo-disque 32 et modifier ainsi, à la demande de l'usager, le contenu de l'émission. Le remplacement de la cassette 12 par un disque 32 est nécessaire, car une sélection d'informations particulières dans une vidéo-cassette 12, prévue selon l'exemple de la figure 3, ne permettrait pas une sélection suffisamment rapide d'une information déterminée.

## Revendications

1. Procédé de transmission d'information sur des réseaux de télévision dans lequel on transmet, en supplément et/ou en remplacement des images et des sons composant les programmes habituels, des textes et des schémas codés sous forme numérique, appelés télétexte, assortis de messages d'identification, pour permettre leur reproduction chez des usagers, sur des postes de réception ordinaires, grâce à l'aide d'appareils de décodage et de mémorisation équipés de sélecteurs, caractérisé en ce que le contenu de l'information à transmettre est représenté d'une part par des signaux analogiques subdivisés en trames ou groupes de plusieurs trames, dans lesquels chaque trame d'un même groupe répète le même contenu, chaque trame ayant une durée égale à celle nécessaire à la transmission d'une trame d'une image de télévision, en ce qu'à chaque trame ou chaque groupe de trames est associé un message d'identification d'image, en ce que, d'autre part, du télétexte représenté par des signaux numériques est repéré par des messages d'identification de télétexte, en ce qu'une trame ou un groupe du plusieurs trames prédéterminée, indentifié par un message d'identification d'image et du télétexte prédéterminé identifié par un message d'identification de télétexte sont choisis et transmis de manière au moins approximativement synchrone, en ce qu'on reçoit les dits signaux analogiques et numériques émis dans un récepteur sensible aux dits messages d'identification, et en ce qu'on reproduit l'information véhiculée dans les signaux analogiques et numériques en successions et/ou combinaisons simultanées arbitrairement choisies.

2. Procédé suivant la revendication 1, caractérisé en ce que les signaux analogiques comprennent des parties représentant des commentaires sonores et en ce que ces parties sont repérées par des messages d'identification de son.

3. Procédé suivant les revendications 1 et 2, caractérisé en ce que l'information sous forme numérique émise comprend outre le télétexte un logiciel d'exploitation de l'ensemble transmis: télétexte, images non mobiles et éventuellement commentaires sonores et en ce qu'à la réception ce logiciel est emmagasiné dans une mémoire (27).

4. Procédé suivant une des revendications 1 à 3, caractérisé en ce que l'information sous forme numérique est diffusée sur un ou plusieurs canaux différents de celui ou de ceux sur lequel ou lesquels est diffusée l'information sous forme analogique.

5. Procédé suivant une des revendications 1 à 3, caractérisé en ce que l'information sous forme numérique et l'information sous forme analogique sont diffusées sur un seul et même canal, l'information sous forme numérique étant émise pendant des temps déterminés prélevés sur les trames des signaux analogiques dans des parties non significatives de ces dernières.

6. Procédé de transmission suivant une des revendications précédentes, caractérisé en ce qu'à la réception l'information transmise sous forme analogique est séparée de l'information transmise sous forme numérique et en ce que, aussi bien l'information analogique que l'information numérique reçue est traitée par l'intermédiaire d'un reconnaisseur de messages (26) en fonction d'un sélecteur local (29) et d'un logiciel transmis et mémorisé dans une mémoire (27).

7. Procédé de transmission suivant une des revendications précédentes, caractérisé en ce qu'à l'émission l'information à transmettre sous forme analogique et l'information à transmettre sous forme numérique sont enregistrées sur un même support de grande qualité en vue d'une répétition rapide et continuelle à l'émission de ces informations.

8. Procédé de transmission suivant une des revendications précédentes, caractérisé en ce que le sélecteur local (29) comprend une liaison via un convertisseur (35) et un coupleur (33) avec un gestionnaire (37), commandant la sélection d'informations particulières disponibles à l'emplacement de l'émetteur.

**Patentansprüche**

1. Verfahren zum Übertragen von Informationen über Fernsehnetzwerke, bei dem, zusätzlich zu den Bildern und Tönen, aus denen die üblichen Programme bestehen und/oder anstelle davon, codierte Texte und Schemas in numerischer Form, die Bildschirmtext genannt werden, und die mit Identifizierungsmitteilungen versehen sind, übertragen werden, wobei diese codierten Texte und Schemas mit Hilfe von Decodier- und Speicherungsapparaten, die mit Wähleinrichtungen ausgerüstet sind, bei Benutzern auf gewöhnlichen Empfangsgeräten wiedergegeben werden, dadurch gekennzeichnet, daß der Inhalt der zu übertragenden Information einerseits durch analoge Signale repräsentiert wird, die in Einzelbilder oder Gruppen aus mehreren Einzelbildern unterteilt sind, wobei jedes Einzelbild einer Gruppe den gleichen Inhalt wiederholt, und jedes Einzelbild eine Dauer aufweist, die gleich der Dauer ist, die für die Übertragung eines Einzelbildes eines Fernsehbildes erforderlich ist; daß jedes Einzelbild oder jede Gruppe von Einzelbildern mit einer Mitteilung zur Bildidentifizierung versehen ist; daß andererseits Bildschirmtext, der durch numerische Signale repräsentiert wird, durch Mitteilungen zur Bildschirmtextidentifizierung markiert ist; daß ein Einzelbild oder eine vorgegebene Gruppe aus mehreren Einzelbildern, die durch eine Mitteilung zur Bildidentifizierung identifiziert ist, und vorgegebener Bildschirmtext, der durch eine Mitteilung zur Bildschirmtextidentifizierung identifiziert ist, gewählt und mindestens annähernd synchron übertragen werden; daß die besagten ausgesendeten analogen und numerischen Signale mit einem für die besagten Identifizierungsmitteilungen empfindlichen Empfänger empfangen werden; und daß die von den analogen und numerischen Signalen beförderte Information in willkürlich gewählten Aufeinanderfolgen und/oder gleichzeitigen Kombinationen wiedergegeben wird.

2. Verfahren gemäß Anspruch 1, dadurch gekennzeichnet, daß die analogen Signale Teile enthalten, die Tonkommentare repräsentieren, und daß diese Teile durch Tonidentifizierungsmitteilungen markiert sind.

3. Verfahren gemäß Anspruch 1 und 2, dadurch gekennzeichnet, daß die in numerischer Form gesendete Information außer dem Bildschirmtext eine Software zur Steuerung der übertragenen Gesamtheit: Bildschirmtext, nicht bewegliche Bilder, und eventuell Tonkommentare, enthält, und daß diese Software beim Empfang in einem Speicher (27) gespeichert wird.

4. Verfahren gemäß einem der Ansprüche 1 bis 3, dadurch gekennzeichnet, daß die Information in numerischer Form auf einem oder mehreren Kanälen gesendet wird, die verschieden von demjenigen oder denjenigen sind, auf dem oder auf denen die Information in analoger Form gesendet wird.

5. Verfahren gemäß einem der Ansprüche 1 bis 3, dadurch gekennzeichnet, daß die Information in numerischer Form, und die Information in analoger Form auf demselben Kanal gesendet werden, wobei die Information in numerischer Form während bestimmter Zeiten gesendet wird, die bei den Einzelbildern der analogen Signale in den nicht signifikanten Teilen dieser letzteren entnommen werden.

6. Übertragungsverfahren gemäß einem der vorhergehenden Ansprüche, dadurch gekennzeichnet, daß die in analoger Form übertragene Information beim Empfang von der in numerischer Form übertragenen Information getrennt wird, und daß sowohl die empfangene analoge Information, als auch die empfangene numerische Information mittels einer Mitteilungs-Erkennungseinrichtung (26) in Abhängigkeit von einem örtlichen Wähler (29) und einer übertragenen und in einem Speicher (27) gespeicherten Software verarbeitet werden.

7. Übertragungsverfahren gemäß einem der vorhergehenden Ansprüche, dadurch gekennzeichnet, daß bei der Sendung die in analoger Form zu übertragende Information, und die in numerischer Form zu übertragende Information auf demselben hochwertigen Träger aufgezeichnet werden, mit dem Ziel einer raschen und kontinuierlichen Wiederholung bei der Sendung dieser Informationen.

8. Übertragungsverfahren gemäß einem der vorhergehenden Ansprüche, dadurch gekennzeichnet, daß der örtliche Wähler (29) über einen Umsetzer (35) und einen Koppler (33) mit einer Steuerungseinrichtung (37) verbunden ist, die die Auswahl von besonderen Informationen steuert, die am Standort des Senders verfügbar sind.

**Claims**

1. Method of transmitting information via television networks, wherein, in addition to and/or in place of the images and sounds composing the usual programmes, texts and diagramms coded in numeric form are transmitted which are called teletext, associated with identification messages to allow their reproduction at the user's end, on ordinary receiving sets, by means of memorisation and decoding apparatus equipped with selectors, characterised in that the content of the information to be transmitted is represented on the one hand by analog signals subdivided into frames or groups of several frames, wherein each frame of one and the same group repeats the same content, each frame having a duration equal to that required for the transmission of a frame of a television image, in that with each frame or each group of frames there is associated an image identification message, in that moreover teletext represented by numeric signals is referenced by teletext identification messages, in that a predetermined frame or group of several frames identified by an image identification message and predetermined teletext identified by a teletext identification message are chosen and transmitted in an atleast approximately synchronous manner, in that the said transmitted numeric and analog signals are received in a receiver sensitive to the said identification messages, and in that the information conveyed in the numeric and analog signals is reproduced in arbitrarily chosen simultaneous combinations and/or sequences.

2. Method according to claim 1, characterised in that the analog signals comprise portions representing sound commentaries and in that these portions are referenced by sound identification messages.

3. Method according to claims 1 and 2, characterised in that the transmitted information in numeric form comprises, in addition to the teletext, a software element for operating the transmitted group: teletext, stationary images, and possibly sound commentaries, and in that on reception this element is stored in a memory (27).

4. Method according to one of claims 1 to 3, characterised in that the information in numeric form is broadcast over one or more channels different from that or those channels used for the broadcasting of the information which is in analog form.

5. Method according to one of claims 1 to 3, characterised in that the information in numeric form and the information in analog form are broadcast over one and the same channel, the information in numeric form being transmitted during predetermined periods of time taken from the frames of the analog signals in the nonsignificant portions of these frames.

6. Method of transmission according to one of the preceding claims, characterised in that, on reception, the information transmitted in analog form is separated from the information transmitted in numeric form and in that both the analog information and also the numeric information received is treated by means of a message recognition element (26) in accordance with a local selector (29) and a software element transmitted and stored in a memory (27).

7. Method of transmission according to one of the preceding claims, characterised in that at transmission the information to be transmitted in analog form and the information to be transmitted in numeric form are recorded on one and the same high-quality support with a view to continual and rapid repetition when such information is emitted.

8. Method of transmission according to one of the preceding claims, characterised in that the local selector (29) comprises a connection via a converter (35) and a coupler (33) with a controller (37) controlling the selection of particular information available at the place where the transmitter is located.

Fig. 1

Fig. 2

0 043 167

Fig. 3

Fig. 4

9

Fig. 5